# EUROPEAN PATENT SPECIFICATION

(11) **EP 0 746 125 B1**
(45) Date of publication and mention of the grant of the patent: **28.11.2001**
(21) Application number: 96107227.9
(22) Date of filing: 08.05.1996
(51) Int. Cl.: H04J 3/16, H04J 3/06

(54) **Method and circuits for the interpretation of the pointer in synchronous digital hierarchy devices**
Verfahren und Schaltungen zur Interpretation von Zeigern in Elementen der synchronen digitalen Hierarchie
Méthode et circuits pour l'interprétation des pointeurs dans les éléments de réseau de la hiérarchie numérique synchrone (SDH)

(30) Priority: 29.05.1995 IT MI951105
(43) Date of publication of application: 04.12.1996
(73) Proprietor: ALCATEL, 75008 Paris (FR)
(72) Inventor: Traverso, Giovanni, 27050 Rovagnate (Le) (IT); Bordogna, Ernesto, 25100 Brescia (IT); Tognini, Pietro, 20060 Vignate (Mi) (IT)
(74) Representative: Colombo, Stefano Paolo

(56) References cited:
- EP-A- 0 539 758
- WO-A-93/25030
- WO-A-94/01946
- WO-A-94/01947

## Description

The invention relates to a method and to the relative circuits for the interpretation of the pointer in synchronous digital hierarchy (or SDH) devices.

The SDH transport technique is able to absorb the phase differences between the various signals coming into a node regulating the pointers pointing, for each channel virtual container (VC), to data position.

For instance, the administrative unit (AU) pointer provides a dynamic and flexible alignment method of the VC inside the AU frame. The dynamic alignment allows the VC to be suitably positioned inside the AU frame. Thus the pointer is able to accommodate the phase differences and the rate variations of the VC.

Therefore it is necessary the interpretation of one or more pointer levels as specified by the International Telecommunication Union (ITU).

In Recommendation G.709 there is described how data blocks to be interpreted are constituted to obtain the correct pointer value.

For instance, data relative to AU3-pointer are constituted by 4 bits called NDF (New Data Flag), 2 bits called SS, ten bits, five of which are called I (Increment) bits alternated with the other five bits called D (Decrement) bits defining the pointer value.

The pointer interpretation method is described in Recommendation G.783.

In this interpretation method three states of the machine called NORM (normal state), AIS (alarm state) and LOP (non-alignment state) are defined. Transition between states will be carried out on the basis of consecutive events. The kind and number of consecutive events activating a transition are selected in such a way that the behaviour is stable and insensible to the bit error rate (BER). Since the method contains transitions based upon consecutive indications only, it entails that non-valid and non-consecutive events do not activate transitions.

The pointer interpretation method can thus be modelled as a finite state machine.

For instance, such interpretation rules provide a normal operation step, during which bits I and D contain the numeric value of the pointer. The variation of this operation step occurs only if:
1) A new valid pointer is received for 3 consecutive frames.
2) Most of the I-bits of the pointer are inverted, in which case the new pointer is the old one increased by one.
3) Most of the D-bits are inverted, in which case the new pointer is the old one decreased by one.
4) The event NDF 1001 is received: received bits I and D contain the new pointer.

More details can be found in Recommendation G.783 already mentioned.

Such interpretation must be carried out in order to reduce the impact of the errors on the transmission line in the demultiplation process.

The problem of the error-tolerance of the pointer interpretation method is posed in different terms, depending on the context taken into consideration.

If the pointers are generated by a remote device, the method must tolerate characteristic errors of the transmissive medium, generally represented, for simplicity, by a statistic process.

If the pointers are generated inside or near the demultiplexing equipment and the signal does not cross a line of the transmission network, one can assume that there are no errors. For instance, in communications between cards in the same equipment. On the contrary, should an error occur in this circumstance, it is no longer an event to be considered as statistically tolerable. In fact, in this circumstance, it could appear as malfunctioning of the equipment itself. Therefore an accidental phenomenon would result, generally attributable to external disturbances, that can affect any electrical signal, the latter being either a control signal, or a timing signal, or a data transfer signal, thus destroying the processed information load.

WO-94/01947, which is considered the closest prior art, discloses a method of interpreting the pointer in Synchronous Digital Hierarchy (SDH) devices according to the preamble of claim 1. The method of D1 is not provided for inter-equipment communications but for interpreting pointers coming from transmission lines. Furthermore, D1 provides both a very reduced complexity and memory savings due to the fact that it only teaches how to eliminate one counter while all the other counters are maintained.

It is an object of the present invention to provide a method and relative circuits able to carry out the pointer interpretation in a simpler and faster way, when it is assumed that there are no transmission errors.

In accordance with the invention this object is achieved through a method having the characteristics set forth in claim 1 and circuit arrangement as set forth in claim 6. Further characteristics of the invention are set forth in the dependent claims.

The method according to the present invention includes the steps of: receiving incoming pointer data blocks, a first data block and a second data block, composed of NDF, SS, I and D bits; interpreting the incoming pointer data and storing the interpreted value as pointer current-value; receiving further incoming pointer data blocks, a first data block and a second data block, composed of NDF, SS, I and D bits; and interpreting the further incoming pointer data and is characterized in that the interpretation step comprises the steps of: interpreting NDF and SS bits of the first data block of the further incoming pointer data blocks; then storing the last two bits of the first data block of the further incoming pointer data blocks; and finally interpreting the stored last two bits of the first data block of the further incoming pointer data blocks and the second block bits of the further incoming pointer data blocks in relation with the stored pointer current-value.

If it is desired to interprete the pointer in a way which is similar to, i.e. which gives the same results of the method proposed by the ITU, it is obvious that some parts of the method are similar, but it is also obvious that other parts must be recreated in order to achieve the proposed object. For instance, in order to avoid misfunctioning due to incorrect interpretation of the pointer.

By using a combinatory logic it is possible to obtain a greater circuit simplicity and through the interpretation based exclusively on the last sample received from the data blocks representing the pointer value, higher interpretation rates are obtained.

Moreover, by storing only the pointer current-value and the last two bits of the first data block, a reduction in the circuit complexity is obtained.

The invention will now be described in greater detail by reference to the attached drawings wherein:
- Fig. 1 represents the arrangement of bits NDF, SS, I, D inside the received data blocks in accordance with Recommendation ITU G.709 for AU3 pointer.
- Fig. 2 is a flow chart of the pointer interpretation method in accordance with the present invention.

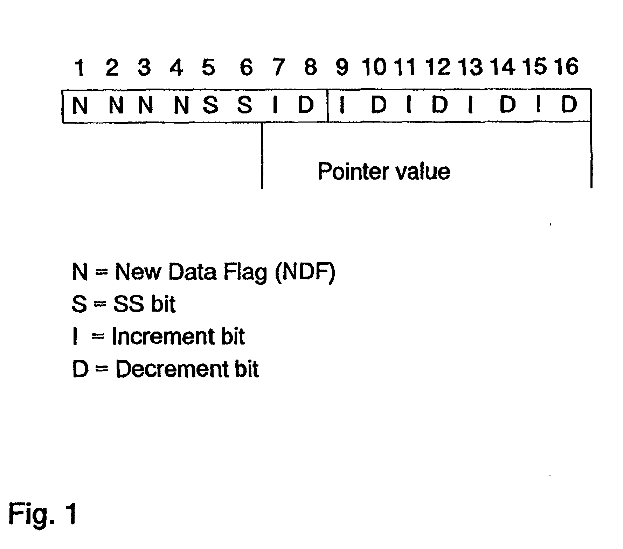

Referring now to Fig. 1, it can be seen that received data are subdivided into two 8-bit blocks. The first four bits are NDF bits indicating the abrupt variation of the transmitted pointer value; the two subsequent bits are the so-called SS bits indicating the type of pointer, e.g., they assume the value 10 for AU3 and AU4 pointers; then, the remaining ten bits represent the value of the pointer and are constituted by bits I and D disposed alternately. Decisions relative to the new value to be assigned to the pointer will be taken on the basis of the value taken by bits I and D and by other bits.

In the following description reference will be made to AU4 pointer without limiting the generality of the application.

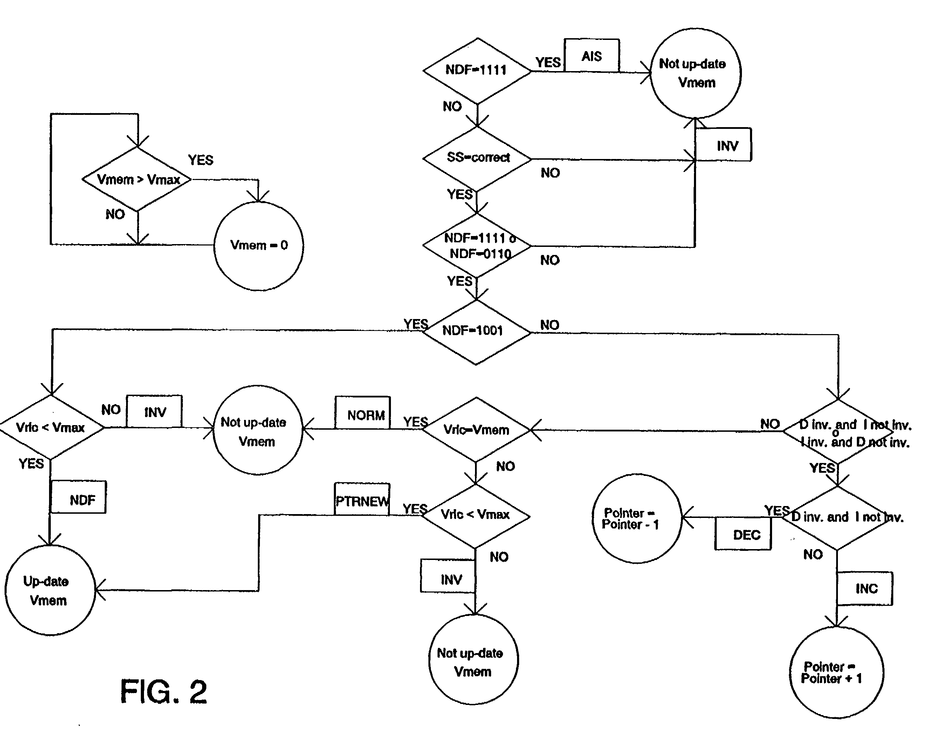

Fig. 2 shows the flow chart of the method of interpreting the pointer in accordance with the present invention. In this flow chart there are shown those events which could occur during the operation of the system. Some of them are those of the methods proposed by ITU and other have been added in order to avoid interpretation inconveniences.
- AIS represents a pre-existent alarm condition,
- INV represents an unforeseen event,
- NORM is a normal operation index,
- PTRNEW is an index of a variation of the pointer,
- DEC stands for "decrease the pointer value by I", and
- INC stands for "increase the pointer value by 1".

The variables as used herein are the following:
- Vmem corresponding to the stored pointer value,
- Vric corresponding to the received pointer value,
- Vmax corresponding to the maximum allowable pointer value which for pointer AU4 corresponds to 782.

Therefore, from the chart one deduces how the pointer interpretation proceeds on the basis of the values of the received data blocks.

In parallel with the process illustrated in Fig. 2, the stored pointer value is periodically checked so that it does not exceed the allowed maximum value. In this case the stored pointer value is set to zero.

From the flow chart one can deduce that, firstly, the values of NDF and SS are analyzed and the value of the received pointer and the stored one are analyzed thereafter. As it can be seen from Fig. 1, the first data block contains the NDF and SS values and the first two bits (I and D) which along with the other eight bits of the second block form the value of the received pointer. In the preferred implementation of this process for the interpretation of the pointer it is enough to analyze the NDF and SS values and store bits 7th and 8th (the first two bits of the pointer value); then, when the second block arrives, the received pointer value composed of bits 7th to 16th is compared with the stored pointer value, thus taking the appropriate decision.

According to an advantageous aspect of the present invention, the possible blockage situations of the state machine which implements the method, have been taken into account.

Blockage situations are those in which the machine, as a result of some change, is not able to automatically comply with the received pointer value, and also that in which the machine oscillates between two different states without deciding which of the two is correct.

The situations to be taken into account, in order to exclude possibilities of blockage, are traceable back to the case of lack of signalling the change of a pointer value (non-NDF).

If indication NDF is lost, the method still recovers the pointer value correctly updated, since, in case of inconsistency of the stored value with the received one, the latter is considered as valid. Moreover, in the circumstance in which the new pointer, received without NDF indication, simulates the increase or the decrease of the current pointer, priority is given to the increase or decrease operation itself. If the indication of increase or decrease corresponds to the effective signalling sent by the transmitter, no errors occur; if, on the other hand, it is an indication simulated by the new pointer value, in the subsequent frame such simulation is no longer possible, thanks to a contrivance of this method and the machine is able to comply with the new pointer value.

The aforesaid contrivance consists in requesting the complementation (inversion) of all bits I(D) for interpreting an increase (decrease), instead of applying the decision by majority, as the method proposed by ITU would do having to be able to tolerate errors in line. Further, thanks to the above-mentioned contrivance, situations of oscillation cannot occur. A situation of this type consists in receiving a new pointer value simulating the indication of increase (decrease) of the value obtained as a result of the first increase (decrease) operation, thus making the machine oscillate between two pointer values, by executing alternated increase or decrease operations.

This cannot occur in the invention since, once the request of observing all I(D) bits for interpreting an increase (decrease) has been put, only two values of the received pointer which could lead to the described oscillation are found, but it is impossible to transmit both.

The oscillation condition would be: (X)inc = (X+1)dec, or its symmetrical one (X)dec = (X-1)inc, where (X)inc indicates X with all its I-bits complemented, and (X)dec indicates X with all its D-bits complemented.

The above values are:
X = 0111111111 = 512, for which (X)inc = (X+1)dec = 1101010101 = 853 which is a value out of the interval of possible pointer values (the maximum value is 783) and it is excluded by the internal control on the coherence of the current value.
X = 1111111111 = 1023, for which (X)inc = (X+1)dec = 0101010101 = 341. But 1023 cannot be transmitted by a pointer generator because greater than the maximum possible value (783), except during the transmission of event AIS, which is anyway correctly detected, in the invention, through the bits of the NDF field.

For a better understanding, such method will now be illustrated herein by describing, for each event, the conditions for the identification thereof and eventual actions taken, still referring to the not limiting example of the AU4-pointer interpretation. In this case the correct value of SS bits is 10.
- Event :: AIS
- Individuation:: NDF = 1111
- Action:: the pointer value stored previously is not updated.
- Event :: NORM
- Individuation:: NDF = 0110, SS = 10 and the received pointer value is equal to the pointer value stored previously.
- Action:: the pointer value stored previously is not updated.
- Event :: DEC
- Individuation:: NDF = 0110, SS = 10 and the values of the received I-bits are equal to the values of the I-bits stored previously and the values of the received D-bits are inverted with respect to the values of the D-bits stored previously.
- Action:: the pointer value stored previously is decreased by 1.
- Event :: INC
- Individuation:: NDF = 0110, SS = 10 and the values of the received D-bits are equal to the values of the D-bits stored previously and the values of the received I-bits are inverted with respect to the values of the I-bits stored previously.
- Action:: the pointer value stored previously is increased by 1.
- Event :: PTRNEW
- Individuation:: NDF = 0110, SS = 10, INC and DEC conditions not verified, and the received pointer value is different from the pointer value stored previously and less than a maximum allowable value.
- Action:: the pointer value is updated with the received pointer value.
- Event :: NDF
- Individuation:: NDF = 1001, SS = 10 and the received pointer value is less than a maximum allowable value.
- Action:: the pointer value is updated with the received pointer value.
- Event :: INV
- Individuation:: All events not contemplated in the preceding cases.
- Action:: the pointer value stored previously is not updated.

At all events, a constant control on the stored pointer value is further present so that, in the remote circumstance of eventual external disturbances which alter its value, should the latter result be out of the interval of allowed values, it would be automatically reset. This to make the realization of the invention fault tolerant not only against transmission but also against errors due to internal causes. The verification of the consistency of the pointer value consists in checking that it is less than or equal to the maximum possible value for the tributary taken into consideration. In the case of tributaries AU3 and AU4 the pointer maximum value is 782.

The circuit arrangement for the pointer interpretation, is constituted by a combinatory logic, but it can be implemented through a software program.

In the preferred embodiment of the present invention, pointer data blocks are received at the input, the values of NDF and SS are instantaneously interpreted and the values of the last two bits of the first data block, i.e. bits 7th and 8th of Fig. 1, are stored which will be interpreted jointly with the second data block. Then, on the basis of these ten bits, the new pointer value which will be stored in a suitable memory ready to be used by successive circuits, is decided.

Given the circuit simplicity of this arrangement, it will not be described in detail being easily realizable by a person skilled in the art.

The proposed method allows the correct interpretation of the pointer, improving the one proposed by ITU in the following parameters:
- higher detection rate of the AIS alarm;
- higher re-alignment rate as a result of errors;
- greater circuit simplicity and lower realization costs.

While the principles of the invention have been set forth in relation to a specific embodiment thereof, it is to be clearly understood that the present description is made only by way of example and not as a limitation to the scope of the invention.

## Claims

1. Method of interpreting the pointer in synchronous digital hierarchy (SDH) devices including the steps of:
- receiving incoming pointer data blocks, first data block and second data block, composed of NDF, SS, I and D bits, the first four bits of first block being NDF bits, the further two bits of the same block being SS bits, the second-last bit being an increment (I) or decrement (D) bit and the last bit of first block being a decrement (D) or increment (I) bit, respectively, the second data block being composed of four increment (I) bits and four decrement (D) bits disposed alternatively,
- interpreting the incoming pointer data and storing the interpreted value as pointer current-value;
- receiving further incoming pointer data blocks, first data block and second data block, composed of NDF, SS, I and D bits, the first four bits of first block being NDF bits, the further two bits of the same block being SS bits, the second-last bit being an increment (I) or decrement (D) bit and the last bit of first block being a decrement (D) or increment (I) bit, respectively, the second data block being composed of four increment (I) bits and four decrement (D) bits disposed alternatively, and
- interpreting the further incoming pointer data,
**characterized in that** the interpretation step comprises the steps of
- interpreting NDF and SS bits of the first data block of the further incoming pointer data blocks; then
- storing the last two bits (I, D) of the first data block of the further incoming pointer data blocks; and finally
- interpreting the stored last two bits (I, D) of the first data block of the further incoming pointer data blocks and the second block bits of the further incoming pointer data blocks in relation with the stored pointer current-value.

2. Method according to claim 1, **characterized by** comprising the step of storing the interpreted value of the further incoming pointer data as pointer current-value to be used for a further pointer interpretation.

3. Method according to claim 1 or 2, **characterized in that** said interpretation comprises the following steps:
- if NDF = 1111 then the pointer current-value stored previously is not updated;
- if NDF = 0110, SS = expected value according to the type of pointer under interpretation, and the value of the received pointer is equal to the pointer current-value stored previously, then the pointer current-value stored previously is not updated;
- if NDF = 0110, SS = expected value according to the type of pointer under interpretation, and the value of the received decrement (D) bits are equal to the values of decrement (D) bits previously stored, and the values of the received increment (I) bits are inverted with respect to the values of the increment (I) bits stored previously, then the pointer current-value stored previously is increased by 1;
- if NDF = 0110, SS = expected value according to the type of pointer under interpretation, and the values of the received increment (I) bits are equal to the values of the received increment (I) bits stored previously and the values of the received decrement (D) bits are inverted with respect to the values of the decrement (D) bits stored previously, then the pointer current-value stored previously is decreased by 1;
- if NDF = 0110, SS = expected value according to the type of pointer under interpretation, the preceding conditions are not verified and the received pointer value is different from the pointer current-value stored previously and is less than a maximum allowable value, then the pointer value is updated with the received pointer value;
- if NDF = 1001 and the received pointer value is less than a maximum allowable value, then the pointer value is updated with the received pointer value, in particular the value of SS bits, indicating the type of pointer, is considered correct when it is 10 for AU-4 pointer interpretation.

4. Method according to claim 3, **characterized in that** said interpretation further comprises the step of not updating the previously stored pointer current-value for any other uncontemplated event.

5. Method according to claim 3, **characterized in that** said interpretation further comprises the step of periodically checking that the pointer current value is less than the maximum allowable value.

6. Circuit arrangement for interpreting the pointer in synchronous digital hierarchy (SDH) devices including:
- means for receiving incoming pointer data blocks, first data block and second data block, composed of NDF, SS, I and D bits, the first four bits of first block being NDF bits, the further two bits of the same block being SS bits, the second-last bit being an increment (I) or decrement (D) bit and the last bit of first block being a decrement (D) or increment (I) bit, respectively, the second data block being composed of four increment (I) bits and four decrement (D) bits disposed alternatively,
- means for interpreting the incoming pointer data and means for storing the interpreted value as pointer current-value;
- means for receiving further incoming pointer data blocks, first data block and second data block, composed of NDF, SS, I and D bits, the first four bits of first block being NDF bits, the further two bits of the same block being SS bits, the second-last bit being an increment (I) or decrement (D) bit and the last bit of first block being a decrement (D) or increment (I) bit, respectively, the second data block being composed of four increment (I) bits and four decrement (D) bits disposed alternatively, and
- means for interpreting the further incoming pointer data,
**characterized in that** the interpretation means comprise:
- means for interpreting NDF and SS bits of the first data block of the further incoming pointer data blocks;
- means for storing the last two bits (I, D) of the first data block of the further incoming pointer data blocks; and finally
- means for interpreting the stored last two bits (I, D) of the first data block of the further incoming pointer data blocks and the second block bits of the further incoming pointer data blocks in relation with the stored pointer current-value.

## Patentansprüche

1. Verfahren zum Interpretieren des Pointers in Einrichtungen mit synchroner digitaler Hierarchie (SDH), das die Schritte umfasst:
- Empfangen eingehender Pointer-Datenblöcke, eines ersten Datenblocks und eines zweiten Datenblocks, die aus NDF-, SS-, I- und D-Bits bestehen, wobei die ersten vier Bits des ersten Blocks NDF-Bits sind, die weiteren zwei Bits desselben Blocks SS-Bits sind, das zweitletzte Bit ein Inkrement- (I) oder Dekrementbit (D) ist und das letzte Bit des ersten Blocks ein Dekrement- (D) bzw. Inkrementbit (I) ist, wobei der zweite Datenblock aus vier Inkrementbits (I) und vier Dekrementbits (D) besteht, die abwechselnd angeordnet sind,
- Interpretieren der eingehenden Pointerdaten und Speichern des interpretierten Wertes als aktueller Wert des Pointers,
- Empfangen weiterer eingehender Pointer-Datenblöcke, eines ersten Datenblocks und eines zweiten Datenblocks, die aus NDF-, SS-, I- und D-Bits bestehen, wobei die ersten vier Bits des ersten Blocks NDF-Bits sind, die weiteren zwei Bits desselben Blocks SS-Bits sind, das zweitletzte Bit ein Inkrement- (I) oder Dekrementbit (D) ist und das letzte Bit des ersten Blocks ein Dekrement- (D) bzw. Inkrementbit (I) ist, wobei der zweite Datenblock aus vier Inkrementbits (I) und vier Dekrementbits (D) besteht, die abwechselnd angeordnet sind, und
- Interpretieren der weiteren eingehenden Pointerdaten,
**dadurch gekennzeichnet, dass** der Interpretationsschritt die Schritte umfasst:
- Interpretieren der NDF- und SS-Bits des ersten Datenblocks der weiteren eingehenden Pointer-Datenblöcke; dann
- Speichern der letzten beiden Bits (I, D) des ersten Datenblocks der weiteren eingehenden Pointer-Datenblöcke; und schließlich
- Interpretieren der gespeicherten letzten beiden Bits (I, D) des ersten Datenblocks der weiteren eingehenden Pointer-Datenblöcke und der Bits des zweiten Blocks der weiteren eingehenden Pointer-Datenblöcke in Beziehung zum gespeicherten aktuellen Wert des Pointers.

2. Verfahren nach Anspruch 1, **dadurch gekennzeichnet, dass** es den Schritt des Speicherns des interpretierten Wertes der weiteren eingehenden Pointerdaten als aktuellen Wert des Pointers umfasst, der für eine weitere Pointerinterpretation verwendet werden soll.

3. Verfahren nach Anspruch 1 oder 2, **dadurch gekennzeichnet, dass** die Interpretation die folgenden Schritte umfasst:
- wenn NDF = 1111, dann wird der vorher gespeicherte aktuelle Wert des Pointers nicht aktualisiert;
- wenn NDF = 0110, SS = erwarteter Wert entsprechend dem Typ des gerade interpretierten Pointers und der Wert des empfangenen Pointers gleich dem vorher gespeicherten aktuellen Wert des Pointers ist, dann wird der vorher gespeicherte aktuelle Wert des Pointers nicht aktualisiert;
- wenn NDF = 0110, SS = erwarteter Wert entsprechend dem Typ des gerade interpretierten Pointers und die Werte der empfangenen Dekrementbits (D) gleich den Werten der vorher gespeicherten Dekrementbits (D) sind und die Werte der empfangenen Inkrementbits (I) in Bezug auf die Werte der vorher gespeicherten Inkrementbits (I) invertiert sind, dann wird der vorher gespeicherte aktuelle Wert des Pointers um 1 erhöht;
- wenn NDF = 0110, SS = erwarteter Wert entsprechend dem Typ des gerade interpretierten Pointers und die Werte der empfangenen Inkrementbits (I) gleich den Werten der vorher gespeicherten Inkrementbits (I) sind und die Werte der empfangenen Dekrementbits (D) in Bezug auf die Werte der vorher gespeicherten Dekrementbits (D) invertiert sind, dann wird der vorher gespeicherte aktuelle Wert des Pointers um 1 verringert;
- wenn NDF = 0110, SS = erwarteter Wert entsprechend dem Typ des gerade interpretierten Pointers, die vorhergehenden Bedingungen nicht verifiziert sind und der Wert des empfangenen Pointers vom vorher gespeicherten aktuellen Wert des Pointers verschieden und kleiner als ein maximal zulässiger Wert ist, dann wird der Wert des Pointers mit dem empfangenen Wert des Pointers aktualisiert;
- wenn NDF = 1001 und der empfangene Wert des Pointers kleiner als ein maximal zulässiger Wert ist, dann wird der Wert des Pointers mit dem empfangenen Wert des Pointers aktulaisiert, insbesondere wird der Wert der SS-Bits, die den Typ des Pointers angeben, als richtig betrachtet, wenn er für eine Interpretation eines AU-4 Pointers 10 beträgt.

4. Verfahren nach Anspruch 3, **dadurch gekennzeichnet, dass** die Interpretation ferner den Schritt des Nicht-Aktualisierens des vorher gespeicherten aktuellen Werts des Pointers für jedes andere nicht betrachtete Ereignis umfasst.

5. Verfahren nach Anspruch 3, **dadurch gekennzeichnet, dass** die Interpretation ferner den Schritt des periodischen Überprüfens, dass der aktuelle Wert des Pointers kleiner als der maximal zulässige Wert ist, umfasst.

6. Schaltungsanordnung zum Interpretieren des Pointers in Einrichtungen mit synchroner digitaler Hierarchie (SDH), die umfasst:
- Mittel zum Empfangen eingehender Pointer-Datenblöcke, eines ersten Datenblocks und eines zweiten Datenblocks, die aus NDF-, SS-, I- und D-Bits bestehen, wobei die ersten vier Bits des ersten Blocks NDF-Bits sind, die weiteren zwei Bits desselben Blocks SS-Bits sind, das zweitletzte Bit ein Inkrement- (I) oder Dekrementbit (D) ist und das letzte Bit des ersten Blocks ein Dekrement- (D) bzw. Inkrementbit (I) ist, wobei der zweite Datenblock aus vier Inkrementbits (I) und vier Dekrementbits (D) besteht, die abwechselnd angeordnet sind,
- Mittel zum Interpretieren der eingehenden Pointerdaten und Mittel zum Speichern des interpretierten Wertes als aktueller Wert des Pointers,
- Mittel zum Empfangen weiterer eingehender Pointer-Datenblöcke, eines ersten Datenblocks und eines zweiten Datenblocks, die aus NDF-, SS-, I- und D-Bits bestehen, wobei die ersten vier Bits des ersten Blocks NDF-Bits sind, die weiteren zwei Bits desselben Blocks SS-Bits sind, das zweitletzte Bit ein Inkrement- (I) oder Dekrementbit (D) ist und das letzte Bit des ersten Blocks ein Dekrement- (D) bzw. Inkrementbit (I) ist, wobei der zweite Datenblock aus vier Inkrementbits (I) und vier Dekrementbits (D) besteht, die abwechselnd angeordnet sind, und
- Mittel zum Interpretieren der weiteren eingehenden Pointerdaten,
**dadurch gekennzeichnet, dass** die Interpretationsmittel umfassen:
- Mittel zum Interpretieren der NDF- und SS-Bits des ersten Datenblocks der weiteren eingehenden Pointer-Datenblöcke;
- Mittel zum Speichern der letzten beiden Bits (I, D) des ersten Datenblocks der weiteren eingehenden Pointer-Datenblöcke; und schließlich
- Mittel zum Interpretieren der gespeicherten letzten beiden Bits (I, D) des ersten Datenblocks der weiteren eingehenden Pointer-Datenblöcke und der Bits des zweiten Blocks der weiteren eingehenden Pointer-Datenblöcke in Beziehung zum gespeicherten aktuellen Wert des Pointers.

## Revendications

1. Méthode d'interprétation du pointeur dans des éléments de réseau à hiérarchie numérique synchrone (SDH) comprenant les étapes suivantes :
- recevoir les blocs de données du pointeur incident, un premier bloc de données et un second bloc de données composés de bits NDF, SS, I et D, les quatre premiers bits du premier bloc étant des bits NDF, les deux bits suivants du même bloc étant des bits SS, l'avant dernier bit étant un bit d'incrément (I) ou un bit de décrément (D) et le dernier bit du premier bloc étant, respectivement, un bit de décrément (D) ou d'incrément (I), le second bloc de données étant composé de quatre bits d'incrément (I) et de quatre bits de décrément (D) disposés en alternance,
- interpréter les données du pointeur incident et mémoriser la valeur interprétée comme valeur en cours du pointeur ;
- recevoir des blocs de données d'un autre pointeur incident, un premier bloc de données et un second bloc de données composés de bits NDF, SS, I et D les autres premiers bits du premier bloc étant des bits NDF, les deux bits suivants du même bloc étant des bits SS, l'avant dernier bit étant un bit d'incrément (I) ou un bit de décrément (D) et le dernier bit du premier bloc étant respectivement, un bit de décrément (D) ou d'incrément (I), le second bloc de données étant composé de quatre bits d'incrément (I) et de quatre bits de décrément (D) disposés en alternance, et
- interpréter les données d' un autre pointeur incident,
**caractérisée en ce que** l'étape d'interprétation comprend les étapes suivantes :
- interpréter les bits NDF et SS du premier des blocs de données de l'autre pointeur incident ; puis
- mémoriser les deux derniers bits (I, D) du premier des blocs de données d'un autre pointeur incident ; et finalement
- interpréter les deux derniers bits mémorisés (I, D) du premier des blocs de données d'un autre bloc incident et les bits du second des blocs de données d'un autre pointeur incident, par rapport à la valeur en cours du pointeur, mémorisée.

2. Méthode selon la revendication 1, **caractérisée en ce qu'**elle comprend l'étape de mémorisation de la valeur interprétée des données d'un autre pointeur incident comme valeur en cours du pointeur à utiliser pour l'interprétation d'un autre pointeur.

3. Méthode selon l'une des revendications 1 ou 2, **caractérisée en ce que** ladite interprétation comprend les étapes suivantes :
- si NDF = 1111 alors la valeur en cours du pointeur, mémorisée précédemment n'est pas mise à jour ;
- si NDF = 0110 SS = la valeur attendue selon le type de pointeur en cours d'interprétation, et si la valeur du pointeur reçu est égale à la valeur en cours du pointeur, précédemment mémorisée, alors la valeur en cours du pointeur, mémorisée précédemment n'est pas mise à jour ;
- si NDF = 0110 SS = la valeur attendue selon le type de pointeur en cours d'interprétation, et si les valeurs des bits de décrément (D) reçus sont égales aux valeurs des bits de décrément (D), précédemment mémorisées, et si les valeurs des bits d'incrément (I) reçus sont inversées par rapport aux valeurs des bits d'incrément (I), mémorisées précédemment, alors la valeur en cours du pointeur, mémorisée précédemment est augmentée de 1 ;
- si NDF = 0110 SS = la valeur attendue selon le type de pointeur en cours d'interprétation, et si les valeurs des bits d'incrément (I) reçus sont égales aux valeurs des bits d'incrément (I) reçus, précédemment mémorisés, et si les valeurs des bits de décrément (D) reçus sont inversées par rapport aux valeurs des bits de décrément (D) mémorisées précédemment, alors la valeur en cours du pointeur, mémorisée précédemment est diminuée de 1 ;
- si NDF = 0110, SS = la valeur attendue selon le type de pointeur en cours d'interprétation, si les conditions précédentes ne sont pas vérifiées, et si la valeur du pointeur, reçue est différente de la valeur en cours du pointeur, mémorisée, précédemment et inférieure à une valeur maximale admissible, alors la valeur du pointeur est mise à jour à la valeur du pointeur reçu ;
- si NDF = 1001 et si la valeur du pointeur reçue est inférieure à une valeur maximale admissible, alors la valeur du pointeur est mise à jour à la valeur du pointeur reçue, en particulier la valeur des bits SS, indiquant le type de pointeur est considérée comme correcte lorsqu'elle est égale à 10 pour l'interprétation du pointeur AU4.

4. Méthode selon la revendication 3, **caractérisée en ce que** ladite interprétation comprend encore l'étape de ne pas mettre à jour la valeur en cours du pointeur, mémorisée précédemment pour tout autre événement non envisagé.

5. Méthode selon la revendication 3, **caractérisée en ce que** ladite interprétation comprend encore l'étape qui consiste à vérifier périodiquement que la valeur en cours du pointeur est inférieure à la valeur maximale admissible.

6. Agencement de circuits pour interpréter le pointeur dans des éléments de réseau à hiérarchie numérique synchrone (SDH) comprenant :
- des moyens pour recevoir des blocs de données du pointeur incident, un premier bloc de données et un second bloc de données, composés de bits NDF, SS, I et D les quatre premiers bits du premier bloc étant des bits NDF, les deux bits suivants du même bloc étant des bits SS, l'avant dernier bit étant un bit d'incrément (I) ou un bit de décrément (D) et le dernier bit du premier bloc étant, respectivement, un bit de décrément (D) ou d'incrément (I), le second bloc de données étant composé de quatre bits d'incrément (I) et de quatre bits de décrément (D) disposés en alternance,
- des moyens pour interpréter les données du pointeur incident et des moyens pour mémoriser la valeur interprétée comme valeur en cours du pointeur ;
- des moyens pour recevoir des blocs de données d'un autre pointeur incident, un premier bloc de données et un second bloc de données, composés de bits NDF, SS, I et D les quatre premiers bits du premier bloc étant des bits NDF, les deux bits suivants du même bloc étant des bits SS, l'avant dernier bit étant un bit d'incrément (I) ou un bit de décrément (D) et le dernier bit du premier bloc étant, respectivement, un bit de décrément (D) ou d'incrément (I), le second bloc de données étant composé de quatre bits d'incrément (I) et de quatre bits de décrément (D) disposés en alternance, et
- des moyens pour interpréter les données de l'autre pointeur incident,
**caractérisé en ce que** les moyens d'interprétation comprennent :
- des moyens pour interpréter des bits NDF et SS du premier des blocs de données de l'autre pointeur incident ;
- des moyens pour mémoriser les deux derniers bits (I, D) du premier des blocs de données d'un autre pointeur incident ; et finalement
- des moyens pour interpréter les deux derniers bits (I, D) mémorisés du premier des blocs de données d'un autre pointeur incident et les bits du second des blocs de données d'un autre pointeur incident en relation avec la valeur en cours du pointeur, mémorisée.
